# EUROPEAN PATENT SPECIFICATION

(11) **EP 0 430 946 B1**
(45) Date of publication and mention of the grant of the patent: **29.06.1994**
(21) Application number: 89903901.0
(22) Date of filing: 08.03.1989
(51) Int. Cl.: C09K 3/30

(54) **AEROSOL DIFFUSION FOGGER**
DIFFUSIONSVERSPRÜHER FÜR AEROSOL
BRUMISEUR DE DIFFUSION EN AEROSOL

(30) Priority: 08.06.1988 US 203766
(43) Date of publication of application: 12.06.1991
(73) Proprietor: PRO EFX, INC., Los Angeles, CA 90004 (US)
(72) Inventor: BECKER, Martin J., Glendale, CA 91207 (US); GILL, James G., Glendale, CA 91203 (US)
(74) Representative: Hansen, Bernd, Dr. Dipl.-Chem.
(86) International application number: PCT/US89/00932
(87) International publication number: WO 89/12083

(56) References cited:
- DE-A- 2 943 521
- FR-A- 1 341 709
- GB-A- 1 243 381

## Description

### BACKGROUND

Cinematographers and still photographers face a problem when wishing to photograph a subject using light diffused through smoke, fog or mist or when trying to photograph objects through smoke, fog or mist or when trying to photograph rays of light within smoke, fog or mist or when trying to photograph the smoke, fog or mist itself. While machines are available which produce such effects, the machines are bulky and difficult to transport and relocate and often require personnel specifically assigned for their operation (see e.g. british patent GB-A 1243381).

These machines need advance preparation so that their use must be preplanned, delaying operations or requiring additional time for retakes. The necessity of preplanning and delaying before use of existing machines may increase difficulty or render impossible the use or capturing of transient conditions.

A need exists for a diffusion fogger which is highly mobile and portable and quick and easy to use. That need has persisted without solution over a long time.

### SUMMARY

The present invention solves the problems of long standing in the prior art.

The present invention provides a hand-held portable aerosol diffusion fogger which uses intimate suspensions of light white mineral oil and a liquified gaseous propellant which are dispensed under an abrupt pressure change while being mixed with separate vapors of the propellant to produce a fine, evenly dispersed and stable fog having particles sizes less than one micron. After a few moments to allow for uniforms dispersion the fog appears as smoke, mist or fog and diffuses light projected therethrough, allows light rays to be photographed therein and allows objects to be photographed therethrough.

An aerosol diffusion fogger apparatus has an aerosol can containing about 10% by weight light white mineral oil and about 90% by weight of an isobutane and propane propellant mixture and having an aerosol valve with a vapor tap and having a fine aerosol nozzle for producing a fine, evenly dispersed and stable fog having particle sizes less than one micron.

A preferred photographic diffusion fog producing mixture has about 5-20% light white mineral oil and about 80-95% of a hydrocarbon propellant for dispensing from a can under the vaporization pressure of the propellant.

In the preferred product the hydrocarbon propellant comprises a mixture of isobutane and propane.

Preferably the light white mineral oil is light white food grade mineral oil.

A preferred oil is a light white food grade mineral oil comprising a homogeneous mixture of aliphatic and alicyclic hydrocarbons.

The preferred method of creating a photographic diffusion fog for a diffused lighting effect and for photographing light rays and objects through the fog includes intimately mixing a dispersion of light white food grade mineral oil in a hydrocarbon propellant and dispensing the dispersion through an aerosol nozzle and producing particles having a size less than one micron.

In the preferred method the mixing further includes releasing a vapor of the propellant through the aerosol nozzle concurrently with the release of the intimate dispersion of the propellant and the light white mineral oil.

The intimately mixed dispersion of the light white mineral oil and the hydrocarbon propellant is pumped through a long tube extending to the bottom of an aerosol container. Concurrently vapors of the hydrocarbon propellant flow through a vapor tap. The vapor and intimate mixture rapidly decompress and atomize into submicron particles in a nozzle.

After releasing the submicron particles in the atmosphere and allowing the resultant fog to stabilize, objects are photographed with light diffused through the fog.

After releasing the submicron particles in the atmosphere and allowing the fog to stabilize, objects are photographed through the fog.

These and further and other objects and features of the above invention are apparent in the disclosure which includes the above and ongoing description, including the claims and the drawings.

### DRAWINGS

Figure 1 is a view partially in cross section of an aerosol diffusion fogger of the present invention.

Figure 2 is a detail of one form of a valve.

Figure 3 is a flow chart of steps of the present invention.

### DESCRIPTION

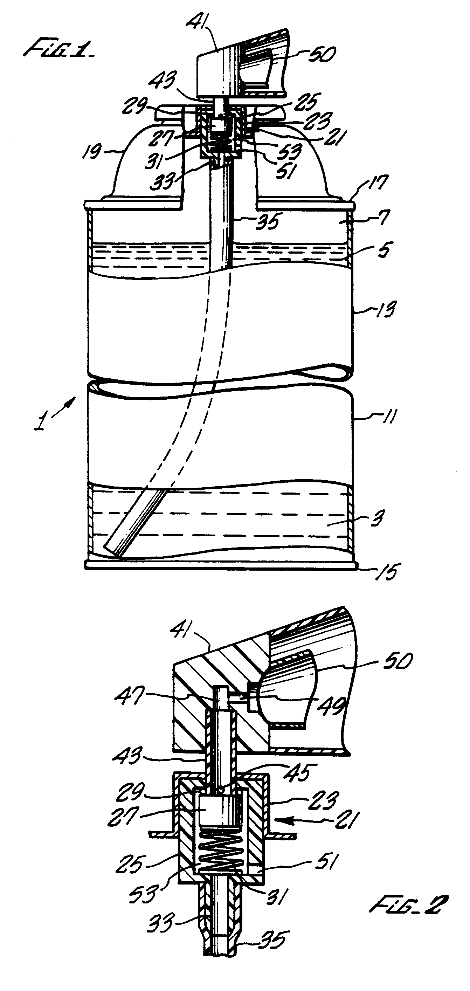

Referring to Figure 1 is a diffusion fogger of the present invention is generally indicated by the numeral 1. The fogger 1 has contents of about 10% light white mineral oil 3 and about 90% of a propellant mixture 5 of isobutane and propane. The relative percentages of the fluids remain substantially constant during depletion of contents of the can by virtue of the substantially constant composition of the exhaust from the can. While less propellant can be used effectively, it is desirable to have an excess of the propellant in the can. The excess propellant ensures that the fog will be delivered under the pressure differential necessary to produce a fine particle size and to project the particles an appreciable distance from the nozzle.

The excess propellant and excess pressure is highly desired so that the particles are sufficiently projected for dispersion so as not to agglomerate and so that all of the oil is dispersed under sufficient pressure to ensure atomization of the oil particles to less than one micron in size so that the oil particles do not gather on adjacent surfaces or collect on horizontal surfaces.

Any suitable light white mineral oil may be used. Preferably the mineral oil is a food grade mineral oil which is suitable for use on food contact surfaces and food processors which require lubrication. Preferably the oil is a homogeneous mixture of complete aliphatic and alicyclic hydrocarbons. One suitable source markets its product under the trademark RUDOL.

A preferred propellant is a mixture of isobutane and propane, preferably in equal parts. Such propellants are widely used as aerosol propellants. Examples of propellants are available under the trademark A-55 or M-55.

A 10% solution of oil in the propellant is preferred. 5-20% solutions or mixtures may be used. Too little oil wastes propellant. Too much oil wastes oil. Too much oil renders incorrect particle size or incorrect particle projection or both upon near exhaustion of the propellant.

The oil may be dissolved in the propellant or the oil may form a dispersion or suspension in the propellant. Preferably the container is agitated before exhausting the propellant and oil.

Volume 7 above the surface of propellant 5 contains vaporized propellant. The vapor pressure provides the dispensing force.

Aerosol container 11 has a side wall 13 and a bottom wall 15. A top wall 17 has edges joined to an upper edge on the side wall 13. A dome-shaped central portion 19 contains the aerosol valve 21. The aerosol valve 21 is shown in a schematic embodiment in which the outer wall 23 holds the valve. An inner cylinder 25 receives a piston 27 which is forced upward against an O-ring seal 29 by spring 31. A nipple 33 on the lower end of the cylinder 25 receives an upper end of a tube 35. The lower end of the tube 35 has an opening which is positioned near an intersection of the side wall 13 and bottom wall 15 of the container 11. Pushing down on plunger 41 moves hollow shaft 43 downward unseating the piston 27 from the O-ring 29. That allows fluid to flow under pressure through radial opening 45 into the hollow shaft 43, into the vestibule 47 and out through the fine nozzle opening 49 as a fine mist. Mechanical breakup or swirl devices 50 swirl and deflect and break up the fine mist flowing from the nozzle.

In a preferred form of the invention cylinder 25 is provided with a vapor tap 51. Propellant vapor flows into chamber 53 through vapor tap 51. When push button 41 is depressed and hole 45 is communicated with chamber 53, vapor pressure of the propellant drives mixed propellant and oil upward through tube 35 and nipple 33 into chamber 53, where it mixes with vapor entering through port 51 before exiting 45 into the push button shaft 43, and the vestibule 47 and outwardly with an abrupt pressure drop through nozzle 49. The diffusion fog is stable. After a few moments which allows uniform dispersion, the fog is ready for cinematography and still photography sessions.

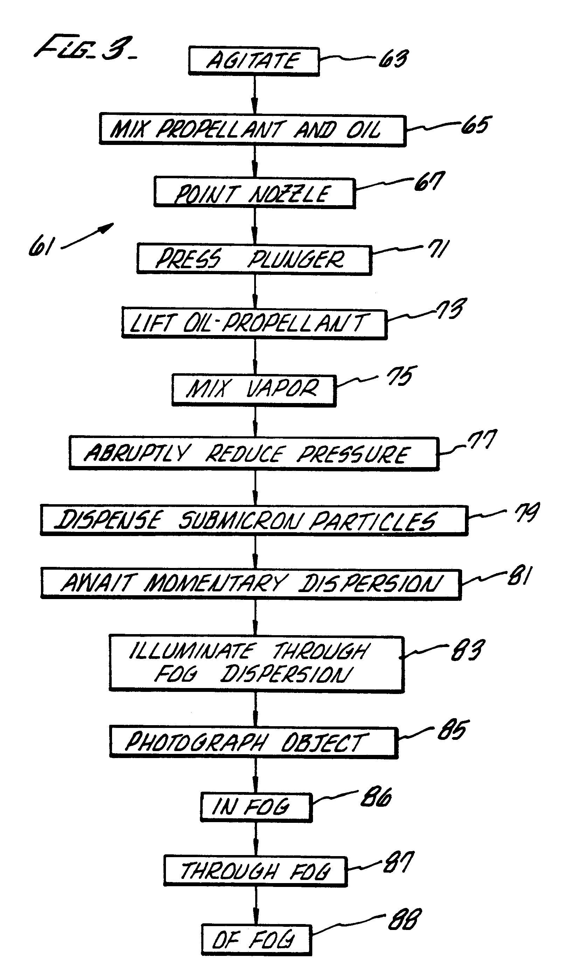

As shown in Figure 3 the steps of the invention, generally indicated by the numeral 62, involve agitating the can 63 and mixing the propellant and oil into an intimate dispersion 65, while pointing the nozzle 67. Steps 63, 65 and 67 occur simultaneously. The plunger is pressed 71, which lifts 73 the oil propellant dispersion and mixes the dispersion with vapor 75 and abruptly reduces pressure 777 in the nozzle, dispensing 79 submicron particles. Steps 71-79 take place concurrently and substantially simultaneously.

One awaits momentary dispersion 81 which takes less than a minute and then illuminates 83 an object through the dispersion and photographs 85 the object. The object may be photographed in the fog 86, through the fog 87, or the object may be the fog 88 or light rays showing through the fog. The entire process from the time that the can is first agitated and pointed takes for example about three minutes before photography may be begun. The submicron particles remain dispersed and the diffusion fog remains in place for a long period of time and may easily be replenished or renewed.

The fog produced by the invention has about the same effect as a 3-D fog filter, but does a much better job, as the diffusion gives definition to rays.

While the invention has been described with reference to specific embodiments, modifications and variations may be made without departing from the scope of the invention as defined in the following claims.

## Claims

1. Use of an aerosol diffusion fogger apparatus comprising an aerosol container (11) containing an effective amount of mineral oil and an amount of non-flammable propellant mixture, the propellant amount being greater by weight than the mineral oil, and having an aerosol valve (21) and an aerosol nozzle (49) wherein mixed propellant and oil is driven upward from the container (11) by a vapor pressure of the propellant and wherein the aerosol nozzle (49) is a fine aerosol nozzle, for producing a photographic light diffusion fog.

2. Use according to claim 1, characterized in that an aerosol diffusion fogger apparatus is used wherein, the aerosol container (11) contains about 10 % by weight light white mineral oil and about 90 % by weight of an isobutane and propane propellant mixture and having an aerosol valve (21) with a vapor tap (51).

3. Use of a mixture comprising about 5-20 % light white mineral oil and about 80 - 95 % of a hydrocarbon propellant mixture for dispensing from a can under the vaporization pressure of the propellant for producing a photographic light diffusion fog.

4. Use according to claim 3 wherein the hydrocarbon propellant comprises a mixture of isobutane and propane.

5. Use according to either claim 3 or 4 wherein the light white mineral oil is light white food grade mineral oil.

6. Use according to any one of claims 3 to 5 wherein the oil is a light white food grade mineral oil comprising a homogeneous mixture of aliphatic and alicyclic hydrocarbons.

7. Method of creating a photographic diffusion fog for a diffused lighting effect and for photographing light rays and objects throught the fog comprising intimately mixing a dispersion of light white food grade mineral oil in a hydrocarbon propellant and dispensing the dispersion through an aerosol nozzle and producing particles having a size less than 1 »m.

8. The method of claim 7 further comprising releasing a pressurized vapor of the propellant through the aerosol nozzle concurrently with the release of the intimate mixture of the propellant and the light white mineral oil.

9. The method of claim 7 or 8 further comprising drawing the intimate mixed suspension of the light white mineral oil and a propellant through a long tube extending to the bottom of an aerosol container and concurrently drawing vapors of the hydrocarbon propellant through a vapor tap and rapidly decompressing and atomizing the vapor and intimate mixture into submicron particles in the nozzle.

10. The method of anyone of the claims 7 to 9 further comprising releasing the particles in the atmosphere, allowing the particles to stabilize and then photographing objects with light diffused through the fog.

11. The method of anyone of claims 7 to 9 further comprising releasing the particles in the atmosphere, allowing the particles to stabilize and then photographing through the fog.

12. Use according to claim 1, characterized in that an aerosol diffusion fogger apparatus is used, wherein the container (11) is a hand-held portable aerosol can.

## Patentansprüche

1. Verwendung eines Diffusionsversprühers für Aerosol, umfassend einen Aerosolbehälter (11), welcher eine wirksame Menge eines Mineralöls und eine Menge einer nichtentzündbaren Treibmittelmischung enthält, wobei die Menge der Treibmittelmischung ein größeres Gewicht hat als das Mineralöl, und mit einem Aerosolventil (21) und einer Aerosoldüse (49), wobei das gemischte Treibmittel und Öl aus dem Behälter (11) mittels Dampfdruck des Treibmittels aufwärts getrieben wird, und wobei die Aerosoldüse (49) eine feine Aerosoldüse ist, zum Herstellen eines fotografischen Lichtstreunebels.

2. Verwendung nach Anspruch 1, dadurch **gekennzeichnet,** daß ein Diffusionsversprüher für Aerosol verwendet wird, wobei der Aerosolbehälter (11) etwa 10 Gew.-% leichtes Weißöl und etwa 90 Gew.-% einer Treibmittelmischung aus Isobutan und Propan enthält, und ein Aerosolventil (21) mit einer Dampfabzweigung (51) aufweist.

3. Verwendung einer Mischung, umfassend etwa 5 bis 20 % leichtes Weißöl und etwa 80 bis 95 % einer Kohlenwasserstofftreibmittelmischung zum Abgeben aus einem Behälter unter Verdampfungsdruck des Treibmittels, zum Herstellen eines fotografischen Lichtstreunebels.

4. Verwendung nach Anspruch 3, wobei das Kohlenwassertofftreibmittel eine Mischung aus Isobutan und Propan umfaßt.

5. Verwendung nach einem der Ansprüche 3 oder 4, wobei das leichte Weißöl leichtes Weißöl von Nahrungsmittelreinheit ist.

6. Verwendung nach einem der Ansprüche 3 bis 5, wobei das Öl ein leichtes Weißöl von Nahrungsmittelreinheit ist, welches eine homogene Mischung aus aliphatischen und alicyclischen Kohlenwasserstoffen umfaßt.

7. Verfahren zum Erzeugen eines fotografischen Streunebels für einen Streulichteffekt und zum Fotografieren von Lichtstrahlen und Objekten durch den Nebel, umfassend gründliches Mischen einer Dispersion aus leichtem Weißöl mit Nahrungsmittelreinheit in einem Kohlenwasserstofftreibmittel und Abgeben der Dispersion durch eine Aerosoldüse und Erzeugen von Teilchen mit einer geringeren Größe als 1»m.

8. Verfahren nach Anspruch 7, welches weiterhin Abgeben eines unter innerem Überdruck gesetzten Dampfes des Treibmittels durch die Aerosoldüse mit gleichzeitiger Freigabe der gründlichen Mischung aus Treibmittel und leichtem Weißöl umfaßt.

9. Verfahren nach Anspruch 7 oder 8, welches weiterhin Ziehen der gründlich gemischten Suspension aus leichtem Weißöl und einem Treibmittel durch eine lange Röhre, die sich bis zum Boden des Aerosolbehälters ausdehnt, und gleichzeitiges Ziehen von Dämpfen des Kohlenwasserstofftreibmittels durch eine Dampfabzweigung und schnelles Dekomprimieren und Atomisieren des Dampfes und gründliche Mischung in Submikronteilchen in der Düse umfaßt.

10. Verfahren nach einem der Ansprüche 7 bis 9, welches weiterhin Freigeben der Teilchen in die Atmosphäre, Stabilisieren der Teilchen und anschließendes Fotografieren von Objekten mit durch den Nebel gestreutem Licht umfaßt.

11. Verfahren nach einem der Ansprüche 7 bis 9, welches weiterhin Abgeben der Teilchen in die Atmosphäre, Stabilisieren der Teilchen und anschließendes Fotografieren durch den Nebel umfaßt.

12. Verwendung nach Anspruch 1, dadurch **gekennzeichnet,** daß ein Diffusionsversprüher für Aerosol verwendet wird, wobei der Behälter (11) ein mit der Hand tragbarer Aerosolbehälter ist.

## Revendications

1. Utilisation d'un générateur de brouillard de diffusion d'aérosol comprenant un conteneur d'aérosol (11) renfermant une quantité efficace d'une huile minérale et une quantité d'un mélange propulseur ininflammable, la quantité pondérale du propulseur étant supérieure à celle de l'huile minérale, et ayant une soupape d'aérosol (21) et un ajutage d'aérosol (49) dans lesquels le propulseur et l'huile mélangés sont entraînés vers le haut à partir du conteneur (11) sous l'effet de la pression de vapeur du propulseur et dans lequel l'ajutage d'aérosol (49) est un fin ajutage d'aérosol, afin de produire un brouillard de diffusion d'une lumière photographique.

2. Utilisation selon la revendication 1, caractérisée en ce qu'on utilise un générateur de brouillard de diffusion d'aérosol dans lequel le conteneur d'aérosol (11) renferme environ 10 % en poids d'huile minérale légère blanche et environ 90 % en poids d'un mélange propulsif d'isobutane et de propane, et comportant une soupape d'aérosol (21) avec un robinet de vapeur (51).

3. Utilisation d'un mélange contenant environ 5-20 % d'huile minérale légère blanche et environ 80 - 95 % d'un mélange propulsif d'hydrocarbures pour distribution à partir d'un bidon sous la pression de vaporisation du propulseur afin de produire un brouillard de diffusion pour lumière photographique.

4. Utilisation selon la revendication 3, dans laquelle le propulseur en hydrocarbures comprend un mélange d'isobutane et de propane.

5. Utilisation selon l'une des revendications 3 ou 4, dans laquelle l'huile minérale légère blanche est une huile minérale légère blanche de la qualité alimentaire.

6. Utilisation selon l'une des revendications 3 à 5, dans laquelle l'huile est une huile minérale légère blanche de la qualité alimentaire comprenant un mélange homogène d'hydrocarbures aliphatiques et alicycliques.

7. Procédé pour créer un brouillard de diffusion photographique pour un effet d'éclairage diffusé et pour photographier des rayons lumineux et des objets à travers le brouillard comprenant le mélange intime d'une dispersion d'une huile minérale légère blanche de la qualité alimentaire dans un propulseur en hydrocarbures et la distribution de la dispersion par l'intermédiaire d'un ajutage d'aérosol et la production de particules ayant un diamètre inférieur à 1 »m.

8. Procédé selon la revendication 7, comprenant en outre la libération d'une vapeur pressurisée du propulseur par l'intermédiaire de l'ajutage d'aérosol simultanément à la libération du mélange intime du propulseur et de l'huile minérale légère blanche.

9. Procédé selon la revendication 7 ou 8, comprenant en outre l'extraction de la suspension mélangée intime de l'huile minérale légère blanche et d'un propulseur par l'intermédiaire d'un long tube s'étendant jusqu'au fond d'un conteneur d'aérosol et l'extraction simultanée des vapeurs du propulseur en hydrocarbures par l'intermédiaire d'un robinet de vapeur et la décompression et l'atomisation rapides de la vapeur et du mélange intime pour obtenir dans l'ajutage des particules de la taille du sous-micron.

10. Procédé selon l'une quelconque des revendications 7 à 9 comprenant en outre la libération des particules dans l'atmosphère, la stabilisation des particules et ensuite la photographie d'objets avec une lumière diffusée à travers le brouillard.

11. Procédé selon l'une quelconque des revendications 7 à 9 comprenant en outre la libération des particules dans l'atmosphère, la stabilisation des particules et ensuite la photographie à travers le brouillard.

12. Utilisation selon la revendication 1, caractérisée en ce qu'on utilise un générateur de brouillard de diffusion d'aérosol, dans lequel le conteneur (11) est un bidon d'aérosol tenu à la main.
